# EUROPÄISCHE PATENTSCHRIFT

(11) **EP 2 477 893 B1**
(45) Veröffentlichungstag und Bekanntmachung des Hinweises auf die Patenterteilung: **19.02.2014**
(21) Anmeldenummer: 10784948.1
(22) Anmeldetag: 09.09.2010
(51) Int. Cl.: B64D 45/00, B64D 47/08, G01S 17/95, G01W 1/08

(54) **VORRICHTUNG UND VERFAHREN ZUR ERMITTLUNG UND ANZEIGE KLIMARELEVANTER WIRKUNGEN EINES VON EINEM FLUGZEUG ERZEUGTEN KONDENSSTREIFENS**
DEVICE AND METHOD FOR DETERMINING AND INDICATING CLIMATE-RELEVANT EFFECTS OF A CONTRAIL PRODUCED BY AN AIRPLANE
DISPOSITIF ET PROCÉDÉ POUR DÉTERMINER ET INDIQUER LES EFFETS SUR LE CLIMAT D'UNE TRAÎNÉE DE CONDENSATION PRODUITE PAR UN AVION

(30) Priorität: 14.09.2009 DE 102009041190
(43) Veröffentlichungstag der Anmeldung: 25.07.2012
(73) Patentinhaber: Deutsches Zentrum Für Luft- Und Raumfahrt E.V. (DLR), 51147 Köln (DE)
(72) Erfinder: MANNSTEIN, Hermann, 82205 Gilching (DE); SCHUMANN, Ulrich, 82211 Herrsching (DE)
(74) Vertreter: Rasch, Michael
(86) Internationale Anmeldenummer: PCT/DE2010/001060
(87) Internationale Veröffentlichungsnummer: WO 2011/029432

(56) Entgegenhaltungen:
- WO-A2-2008/145954
- DE-B3- 10 359 868
- US-A- 5 285 256
- US-A- 5 546 183
- US-A1- 2006 273 223

## Beschreibung

Die Erfindung betrifft eine Vorrichtung und ein Verfahren zur Ermittlung und Anzeige klimarelevanter Wirkungen eines von einem Flugzeug erzeugten Kondensstreifens an Bord des Flugzeugs. Die Erfindung findet insbesondere Anwendung im Bereich der Zivilluftfahrt.

Es ist bekannt (vgl. J.E. Penner et al.: "Aviation and the Global Atmosphere" IPCC, 1999, Technical Report, Cambridge Universitiy Press), dass klimarelevante Wirkungen des Flugverkehrs insbesondere auf folgenden drei Triebwerksemissionsprodukten beruhen:
- Wasserdampf (1,25 kg),
- Kohlendioxid (3,15 kg), und
- Stickoxide (5 - 25 g).

Die vorstehenden Angaben in Klammern sind ca.-Angaben, die die Masse der einzelnen Verbrennungsprodukte bei einer Verbrennung von 1 kg Kerosin in modernen Triebwerken im Reiseflug angeben. Die klimarelevanten Wirkungen der Triebwerksemissionsprodukte ergeben sich wie folgt. Kohlendioxid (CO₂) und Wasserdampf (H₂O) wirken direkt als Treibhausgase. Die reaktiven Stickoxide NO, NO₂, (NOₓ), die selbst keine Treibhausgase sind, beeinflussen die Bildung von Ozon (O₃). das wiederum als Treibhausgas wirkt. Die Emission von Wasserdampf (H₂O) aus Flugzeugtriebwerken verursacht bei entsprechender Umgebungslufttemperatur und -feuchte zudem die Bildung von Kondensstreifen (engl. "condensation-trails" oder "contrails") und nimmt so zusätzlichen Einfluss auf die lokale Strahlungsbilanz der Atmosphäre.

Kondensstreifen sind häufig als weiße "linienförmige Wolken" (linienförmige Cirrus-Wolken) hinter hochfliegenden Flugzeugen zu erkennen. Je nach Umgebungsbedingungen kann ein Kondensstreifen mehrere Stunden existieren und sich dabei derart verbreitern, dass er in eine (groß-) flächige Cirrus-Bewölkung übergeht. Wie Untersuchungen ergeben haben, liegen die für eine Kondensstreifenbildung erforderlichen Umgebungsbedingungen relativ selten vor, so dass sich bei einer Gesamtbetrachtung des Flugverkehrs eine Kondensstreifenbildung nur für etwa 15 Prozent aller geflogenen Flugkilometer ergibt. Die optischen Eigenschaften eines Kondenssteifens bzw. der sich daraus direkt bildenden Cirrus-Wolken hängen von Partikelemissionen des Triebwerks, einer Partikelbildung im Abgasstrahl, sowie von den Umgebungsbedingungen ab. Die Strahlungswirkung von Kondensstreifen ist zeitlich und räumlich hoch variabel. In der Nacht erwärmen Kondensstreifen die lokale Atmosphäre, am Tag können sie, zumindest über dunklem Untergrund, auch kühlen. Die erwärmende Strahlungswirkung der Kondensstreifen kann dabei eine Größenordnung erreichen, die mit der des von den Flugzeugtriebwerken emittierten CO₂ vergleichbar ist. Die klimarelevante Strahlungswirkung der Kondensstreifen wird derzeit weder direkt erfasst noch durch operative Maßnahmen beeinflusst.

Aus der Patentschrift DE 103 59 868 B3, die den nächstliegenden Stand der Technik darstellt, ist ein Verfahren und eine Vorrichtung bekannt, mit der ein sich hinter einem Flugzeug bildender Kondensstreifen erkannt werden kann. Hierzu nehmen im hinteren Bereich des Flugzeugs angeordnete, entgegengesetzt zur Flugrichtung blickende und im sichtbaren und/oder infraroten Spektralbereich empfindliche Kameras Bilddaten auf. Anhand einer geeigneten Auswertung der aufgenommenen Bilddaten kann ermittelt werden, ob sich im Nachlauf des Flugzeugs Kondensstreifen gebildet haben. Damit kann an Bord eines Flugzeugs eine aktuelle Aussage darüber getroffen werden, ob sich ein Kondensstreifen hinter dem Flugzeug gebildet hat.

Aus dem Artikel von Mannstein, H., Spichtinger" P., Gierens, K., "A Note on how to avoid contrail cirrus", ELSEVIER Ltd., Transportation Research, Part D, (2005) 10, S. 421 - 426, ist weiterhin bekannt, dass die zur Bildung von Kondensstreifen erforderlichen Umgebungsbedingungen, insbesondere die Eisübersättigung in der Atmosphäre, typischerweise nur in Luftschichten mit geringer Höhenerstreckung vorkommt, so dass eine Höhenänderung eines in einer solchen Luftschicht fliegenden Flugzeugs um nur +/-2000 ft (610 m) die Auftretenswahrscheinlichkeit von Kondensstreifen im 50 % reduziert.

Im Stand der Technik ist es somit möglich, an Bord eines Flugzeuges zu erkennen, ob das Flugzeug aktuell einen Kondensstreifen erzeugt. Wird ein Kondensstreifen erzeugt, kann das Flugzeug durch entsprechende Änderung seiner Flughöhe eine Kondensstreifenbildung verhindern. Mit den im Stand der Technik bekannten Methoden ist es jedoch nicht möglich, klimarelevante Wirkungen eines vom Flugzeug erzeugten Kondensstreifens aktuell an Bord des Flugzeug zu ermitteln. Insbesondere kann bisher nicht erkannt werden, ob der aktuell hinter einem Flugzeug erzeugte Kondensstreifen einen die Atmosphäre erwärmenden oder kühlenden Effekt hat.

Die Aufgabe der vorliegenden Erfindung ist es, eine Vorrichtung und ein Verfahren zur Ermittlung und Anzeige klimarelevanter Wirkungen eines von einem Flugzeug erzeugten Kondensstreifens an Bord des Flugzeugs anzugeben. Dabei wird der Begriff "Kondensstreifen" breit verstanden. Er umfasst insbesondere auch die vorstehend beschriebenen (groß-) flächigen Cirrus-Wolken, die sich direkt aus dem Kondensstreifen bilden.

Die Erfindung ergibt sich aus den Merkmalen der unabhängigen Patentansprüche. Vorteilhafte Weiterbildungen und Ausgestaltungen sind Gegenstand der abhängigen Patentansprüche. Weitere Merkmale, Anwendungsmöglichkeiten und Vorteile der Erfindung ergeben sich aus der nachfolgenden Beschreibung.

Die erfindungsgemäße Vorrichtung zur Ermittlung und Anzeige klimarelevanter Wirkungen eines von einem Flugzeug erzeugten Kondensstreifens an Bord des Flugzeugs, umfasst: erste Sensormittel zur Ermittlung von Strahlungsdaten von in der Erdatmosphäre aufwärtsgerichteter kurz- und langwelliger atmosphärischer Strahlung am Ort des Flugzeugs, zweite Sensormittel zur Ermittlung von Lufttemperatur und Luftfeuchte am Ort des Flugzeugs, ein Mittel zur Bestimmung des aktuellen Zenitwinkels der Sonne am Ort des Flugzeugs, ein Auswertemittel, mit dem auf Basis der ermittelten Strahlungsdaten, der Lufttemperatur, der Luftfeuchte und des Zenitwinkels ein durch den Kondensstreifen bewirkter Strahlungsantriebswert ermittelbar ist, und ein Anzeigemittel zur Anzeige des Strahlungsantriebswertes und/oder daraus abgeleiteter Größen.

Geeignete erste und zweite Sensormittel sind dem Fachmann aus dem Stand der Technik bekannt und können je nach flugzeugspezifischen oder zulassungstechnischen Anforderungen:gewählt werden. Dabei werden bevorzugt hochauflösende Sensoren verwendet, die mit einer möglichst hohen Abtastrate (bspw. 1 - 10 Hz) abgefragt werden. Die kurzwellige atmosphärische Strahlung kann mit so genannten Pyranometern erfasst werden und umfasst bevorzugt einen Bereich des elektromagnetischen Spektrums mit Wellenlängen < 4.000 nm, insbesondere von 200 - 3.000 nm. Die langwellige atmosphärische Strahlung kann mit so genannten Pyrgeometern erfasst werden und umfasst bevorzugt einen Bereich des elektromagnetischen Spektrums mit Wellenlängen > 4000 nm, insbesondere von 4.000 - 45.000 nm. Die Lufttemperatur und die Luftfeuchte der das Flugzeug umgebenden Luft werden bevorzugt mit Sensoren erfasst, die in geringem Abstand nebeneinander angeordnet sind. Die Berechnung, des aktuellen Zenitwinkels der Sonne am aktuellen Ort des Flugzeugs, erfolgt vorzugsweise auf Basis der aktuellen Uhrzeit und der aktuellen Position. Das Mittel ist daher vorzugsweise mit einem Navigationssystem des Flugzeugs verbindbar, das die aktuelle Uhrzeit und die aktuelle Flugzeugposition bereitstellt.

Der Begriff des "Strahlungsantriebs" (engl. "radiative forcing") wurde vom Intergovernmental Panel on Climate Change "IPCC" eingeführt, um im Rahmen von Klimastudien eine externe Störung der Strahlungsbilanz des Klimasystems Erde zu beschreiben. Eine derartige Störung kann in Form einer Konzentrationsänderung einer für die Strahlungsbilanz relevanten Substanz (z.B. Treibhausgase, Aerosole), einer Änderung der Bestrahlungsstärke der Sonne, oder eben in Form einer Änderung der natürlichen Wolkenbildung durch Kondensstreifen auftreten. Jede Störung der Strahlungsbilanz hat das Potential, Veränderungen von Klimaparametern und damit einen neuen Gleichgewichtszustand des Klimasystems Erde herbeizuführen. Der Strahlungsantrieb wird typischerweise in Watt/m² angegeben. Der Strahlungsantrieb ist negativ für eine Störung der Strahlungsbilanz, die einen abkühlenden Effekt auf die Atmosphäre ausübt. Der Strahlungsantrieb ist positiv für eine Störung der Strahlungsbilanz, die einen erwärmenden Effekt auf die Atmosphäre ausübt. Das Konzept des Strahlungsantriebes wurde seinerzeit vom IPCC auf Störungen der globalen Strahlungsbilanz relativ zu vorindustriellen Strahlungsbilanzwerten bezogen. Vorliegend gibt der Strahlungsantrieb (Strahlungsantriebswert) eine durch einen Kondensstreifen hervorgerufene Störung der lokalen atmosphärischen Strahlungsbilanz am Ort des Flugzeugs an.

Für die Ermittlung eines durch einen Kondensstreifen bewirkten Strahlungsantriebswertes auf Basis von Daten zur aufwärtsgerichteten kurz- und langwelligen atmosphärischen Strahlung, der Lufttemperatur, der Luftfeuchte und des Zenitwinkels der Sonne sind dem Fachmann im Stand der Technik verschiedene Rechenmethoden, Näherungen und Parametrisierungen bekannt. Beispielhaft sei hierzu auf die Artikel von T. Corti und T.Peter, "A simple model for cloud radiative forcing", in Atmos.Chem.Phys., 9, 5751-5758, 2009; Schumann et al. , "A contrail cirrus prediction tool", Proc. Intern. Conf. on Transport , Atmosphere and Climate-2 (Aachen and Maastricht) 2009; und Vortrag: Schumann et al. "A Parametric radiative forcing model for cirrus and contrail cirrus", ESA Atmospheric Science Conference, Barcelona, 7.-11- September 2009 verwiesen.

Mit dem bekannten Stand des Wissens kann auf Basis der vorstehend beschriebenen Eingangsdaten zumindest eine entsprechende Abschätzung des durch den Kondensstreifen verursachten Strahlungsantriebswertes ermittelt werden.

Bevorzug wird das Anzeigemittel im Cockpit des Flugzeugs, im Sichtbereich des Piloten angeordnet, so dass der Pilot erkennt, ob ein hinter dem Flugzeug erzeugter Kondensstreifen aktuell eine kühlende oder erwärmende Wirkung auf die Atmosphäre ausübt und wie stark diese Wirkung jeweils ist. Hierzu zeigt das Anzeigemittel den ermittelten Strahlungsantriebswert und/oder eine davon abgeleitete Größe oder Information an. Der Pilot kann so bspw. gezielt seine Flughöhe beibehalten, wenn ein hinter dem Flugzeug gebildeter Kondensstreifen eine kühlende atmosphärische Wirkung hat. Im Falle einer die Atmosphäre erwärmende Wirkung kann der Pilot gezielt seine Flughöhe soweit ändern, bis keine Kondensstreifenbildung mehr vorliegt. Die erfindungsgemäße Vorrichtung ermöglicht somit eine gezielte Einflussnahme des Piloten bspw. auf die Flughöhe, in Abhängigkeit von einer gewünschten Klimawirkung aufgrund eines vom Flugzeug erzeugten Kondensstreifens.

Vorliegend werden die ermittelten Strahlungsantriebwerte bevorzugt auf die Flugstrecke des Flugzeugs bezogen und bspw. über die mittlere Lebensdauer der Kondensstreifen integriert und in der Einheit GJoule pro km angegeben bzw. angezeigt. An Bord des Flugzeugs kann so für jeden zurückgelegten Flugkilometer ein Strahlungsantriebswert ermittelt werden. Vom Start bis zur Landung des Flugzeugs, kann somit eine Zeitreihe von Strahlungsantriebswerten erfasst werden. Diese Zeitreihe gibt dann entlang des Flugweges die Störung der lokalen atmosphärischen Strahlungsbilanz durch Kondensstreifenbildung an.

Wie vorstehend erwähnt; ist eine Kondensstreifenbildung, neben der Umgebungslufttemperatur und -feuchte, auch von weiteren Parametern, bspw. der Partikelkonzentration im Triebwerksabgas und in der Umgebungsluft, abhängig (vgl. bspw.: J.E.Penner et al. "Aviation and the Global Atmosphere", Chap. 3.2.4. "Contrail and Ice Particle Formation", IPCC 1999, Cambridge University Press, oder in: F. Immler et al. "Cirrus, contrails, and ice supersaturated regions in high pressure systems at northern mid latitudes" Atmos. Chem. Phy., 8, 1689-1699, 2008). Da diese zusätzlichen Parameter aktuell nicht erfasst werden, können Fehler bei der Ermittlung von Strahlungsantriebswerten auftreten, wenn sich nach einem im Auswertemittel hinterlegten Algorithmus, auf Basis der aktuell ermittelten Umgebungslufttemperatur und -feuchte eine Kondensstreifenbildung ergibt, diese jedoch in Realität nicht eintritt.

Um diesen Fehler weitestgehend zu minimieren, umfasst die erfindungsgemäße Vorrichtung bevorzugt eine oder mehrere in Flugrichtung nach hinten blickende Kameras und ein entsprechendes automatisches Bildauswertsystem zur Kondensstreifenerkennung, wie dies in der zuvor zitierten Patentschrift DE 103 59 868 B3 offenbart ist. Das Bildauswertesystem ist in dieser Weiterbildung der erfindungsgemäßen Vorrichtung mit dem Auswertesystem verbunden. Wird vom Bildauswertesystem eine Kondensstreifenbildung erkannt, dient dies der Verifikation der im Auswertesystem hinterlegten Algorithmen zur Kondensstreifenbildung. Bevorzugt wird in diesem Fall ein Strahlungsantriebswert erst dann ermittelt, wenn das Bildauswertesystem eine Kondensstreifenbildung erkannt hat. Denkbar sind dabei auch im Auswertesystem hinterlegte selbstlernende Algorithmen zur Kondensstreifenbildung, die sich auf Basis der vom Bildauswertesystem verifizierten tatsächlichen Kondensstreifenbildung ständig optimieren.

Natürlich sind auch andere Verfahren und Vorrichtungen zur Verifikation einer aktuellen Kondensstreifenbildung nutzbar, bspw. die Verwendung einer Laserabtastung des in Fahrtrichtung hinter dem Flugzeug liegenden Bereichs und einer entsprechenden Auswertung der rückgestreuten Signale.

Eine bevorzugte Weiterbildung der erfindungsgemäßen Vorrichtung weist eine erste Schnittstelle auf, über die dem Auswertemittel prognostische Wettersimulationsdaten für eine Umgebung des Flugzeugs bereitstellbar sind. Weiterhin weist das Auswertemittel ein erstes Modul auf, mit dem auf Basis der prognostischen Wettersimulationsdaten, der Strahlungsdaten, der Lufttemperatur, der Luftfeuchte und des Zenitwinkels, eine Lebensdauer des Kondensstreifens und die über die Lebensdauer integrierte Gesamtstrahlungswirkung des Kondensstreifens ermittelbar ist. Schließlich wird in dieser Weiterbildung der Strahlungsantriebswert vom Auswertemittel auf Basis der integrierten Gesamtstrahlungswirkung des Kondensstreifens ermittelt.

Auf Basis der prognostischen Wettersimulationsdaten kann somit vom ersten Modul die zeitlich-räumliche Entwicklung des in der Atmosphäre erzeugten Kondensstreifens abhängig vom aktuellen Wettergeschehen für die Zukunft simuliert bzw. vorhergesagt werden. Die dabei erzeugten Strahlungsantriebswerte berücksichtigen also aktuelle Wetterentwicklungen und sind deshalb realistischer bzw. genauer als Strahlungsantriebswerte, die auf Basis von Näherungen und ohne Bezug zum aktuellen Wettergeschehen ermittelt werden. Die hierzu erforderlichen Wettersimulationsdaten entsprechen bspw. den Daten, wie sie vom numerischen Wettervorhersagemodell des ECMWF (= "European Centre for Medium-Range Weather Forecasts") oder dem Deutschen Wetterdienst zur Verfügung gestellt werden. Die Berechnung der zeitlich-räumliche Entwicklung des Kondensstreifens auf Basis der Wettersimulationsdaten basiert auf bekannten Ansätzen, die bspw. in entsprechenden Trajektorienmodellen Verwendung finden.

Vorzugsweise weist die erfindungsgemäße Vorrichtung eine Empfangseinheit zum drahtlosen Empfang von Wettersimulationsdaten und zur Bereitstellung der Wettersimulationsdaten an der ersten Schnittstelle auf. Dadurch kann gewährleistet werden, dass die Berechnungen der zeitlich-räumlichen Entwicklung eines Kondensstreifens durch das erste Modul, ständig auf Basis der aktuellsten Wettersimulationsdaten erfolgt. Denkbar ist hier die Funkübermittlung entsprechender Wettersimulationsdaten bspw. des ECMWF-Wettervorhersagemodells. Alternativ kann die Vorrichtung eine Rechnereinheit an Bord des Flugzeugs umfassen, welche die prognostischen Wettersimulationsdaten erzeugt und an der ersten Schnittstelle bereitstellt. Allerdings benötigt diese Rechnereinheit möglichst aktuelle meteorologische Initialisierungsdaten, welche bspw. kurz vor Beginn des Fluges bereitgestellt werden.

Die Lebensdauer eines Kondensstreifens kann bspw. aus den Parametern: Feuchte, Temperatur und Vertikalgeschwindigkeit abgeschätzt werden, wobei angenommen wird, dass ein Kondensstreifen sich solange von der Umgebung abheben wird, bis das so genannte Koop-Limit zur homogenen Eisnukleation erreicht wird.

Die integrierte Gesamtstrahlungswirkung des Kondensstreifens und damit der Strahlungsantriebswert wird bevorzugt auf eine Flugstrecke bezogen ermittelt, d.h. es wird die Gesamtstrahlungswirkung über die Lebensdauer jeweils eines Kondensstreifenstücks von bspw. 1 km Länge bzw. der entsprechende Strahlungsantriebswert ermittelt. Alternativ oder zusätzlich kann bspw. durch Summation der Gesamtstrahlungswirkungen für die einzelnen Kondensstreifenstücke ein Strahlungsantriebswert für einen gesamten, hinter dem Flugzeug erzeugten Kondensstreifen ermittelt und angezeigt werden.

Eine weitere bevorzugte Ausführungsform der erfindungsgemäßen Vorrichtung umfasst eine zweite Schnittstelle, über die dem Auswertemittel Treibstoffverbrauchsdaten des Flugzeugs bereitstellbar sind, wobei das Auswertemittel ein zweites Modul aufweist, mit dem auf Basis der Treibstoffverbrauchsdaten eine Strahlungswirkung vom Flugzeug emittierter Treibhausgase ermittelbar ist. Bei dieser Weiterbildung basiert der vom Auswertemittel ermittelte Strahlungsantriebswert, neben der Strahlungswirkung des Kondensstreifens zusätzlich auf der Strahlungswirkung der emittierten Treibhausgase. Der durch die Treibhausgase erzeugte Strahlungsantrieb ist durch den Treibstoffverbrauches allein weitgehend bestimmt. Wie vorstehend erläutert wurde, erzeugen die Treibhausgase durchweg einen positiven Strahlungsantrieb, während Kondensstreifen je nach Umgebungsbedingungen positive oder negative Strahlungsantriebe erzeugen können. In dieser Weiterbildung werden beide Effekte berücksichtigt und separat oder summiert angezeigt.

Die erfindungsgemäße Vorrichtung umfasst bevorzugt eine Speichereinheit zur Speicherung ermittelter Strahlungsantriebswerte und/oder daraus abgeleiteter Größen. Weiterhin kann eine Sendeeinheit zur drahtlosen Übermittlung der ermittelten Strahlungsantriebswerte und/oder der daraus abgeleiteten Größen an eine Empfangsstation vorhanden sein. Beides dient einer möglichen nachträglichen Auswertung der während des Fluges erfassten Strahlungsantriebswerte.

Ein zweiter Aspekt der vorliegenden Erfindung betrifft ein Verfahren zur Ermittlung und Anzeige klimarelevanter Wirkungen eines von einem Flugzeug erzeugten Kondensstreifens an Bord des Flugzeugs. Das erfindungsgemäße Verfahren umfasst folgende Schritte: Ermitteln von Strahlungsdaten von in der Erdatmosphäre aufwärtsgerichteter kurz- und langwelliger atmosphärischer Strahlung am Ort des Flugzeugs, Ermitteln einer aktuellen Lufttemperatur und einer aktuellen Luftfeuchte am Ort des Flugzeugs, Bestimmen des aktuellen Zenitwinkels der Sonne am Ort des Flugzeugs, Ermitteln eines durch den Kondensstreifen bewirkten Strahlungsantriebswertes auf Basis der ermittelten Strahlungsdaten, der Lufttemperatur, der Luftfeuchte und des Zenitwinkels, und Anzeigen des Strahlungsantriebswertes und/oder daraus abgeleiteter Größen.

Zur Erläuterung des erfindungsgemäßen Verfahrens wird auf die vorstehenden Ausführungen zur erfindungsgemäßen Vorrichtung verwiesen, die in analoger Weise auch auf das vorliegende Verfahren übertragen werden können.

Eine erste vorteilhaft Ausführungsform des Verfahrens zeichnet sich dadurch aus, dass unter Einbeziehung von bereitgestellten prognostischen Wettersimulationsdaten für eine atmosphärische Umgebung des Flugzeugs, eine erste Lebensdauer des Kondensstreifens und eine über die erste Lebensdauer integrierte Gesamtstrahlungswirkung des Kondensstreifens ermittelt wird, und der Strahlungsantriebswert auf Basis der integrierten Gesamtstrahlungswirkung des Kondensstreifens ermittelt wird.

Ein zweite vorteilhafte Ausführungsform des Verfahrens zeichnet sich dadurch aus, dass unter Einbeziehung von aktuellen Treibstoffverbrauchsdaten des Flugzeugs eine Strahlungswirkung vom Flugzeug emittierter Treibhausgase ermittelt wird, und der Strahlungsantriebswert zusätzlich auf Basis der Strahlungswirkung der emittierten Treibhausgase bestimmt wird.

Bevorzugt können prognostische Wettersimulationsdaten drahtlos von einer Bodenstation an das Flugzeug übermittelt und dort bereitgestellt werden. Alternativ oder zusätzlich können die Wettersimulationsdaten an Bord das Flugzeug erzeugt und bereitgestellt werden. Insbesondere bevorzugt werden die ermittelten Strahlungsantriebswerte und/oder daraus abgeleitete Größen an Bord des Flugzeugs gespeichert und/oder drahtlos an eine Bodenstation übermittelt.

Nachdem der Flugverkehr bisher unter allen Verkehrsarten die höchsten Zuwachsraten aufweist, wird sein Anteil an der globalen Erwärmung in Zukunft absehbar noch steigen und somit auch die Notwendigkeit, Maßnahmen zur Verringerung der Auswirkungen des Flugverkehrs auf das Klima zu ergreifen. Die vorliegende Erfindung kann zur Verringerung schädlicher klimarelevanter Wirkungen des Flugverkehrs beitragen, indem bereits im Flug aus der Kombination von Strahlungs-, Temperatur- und Feuchtemessungen der lokal zu erwartende Strahlungsantrieb durch Kondensstreifen ausgewertet wird und über eine Anzeige im Cockpit als Entscheidungsgrundlage für etwaige Flughöhen- oder Routenänderungen zur Verfügung steht. Darüber hinaus lassen sich Maßnahmen, die bereits während der Flugplanung, d.h. vor dem Start des Flugzeugs, erfolgt sind, auf ihren Erfolg hin überprüfen.

Zusammenfassend wird aus Messungen der aufwärtsgerichteten kurzweiligen und langweiligen Strahlungsflussdichte, der Umgebungstemperatur und -feuchte in Verbindung mit dem durch Orts- und Zeitangabe bestimmten Sonnenstand der Strahlungsantrieb eines Kondensstreifens, wie er im Reiseflugniveau erzeugt werden kann, abgeschätzt bzw. ermittelt. Eine diesem Problem entsprechende Parametrisierung des Strahlungsantriebs als Funktion der optischen Dicke eines Kondensstreifens, der Temperatur, des Sonnenstandes und der aufwärtsgerichteten Strahlungsflüsse kann dem Stand der Technik entnommen werden. Der ermittelte Strahlungsantriebswert wird auf einem Display dargestellt und bevorzugt zur späteren Auswertung gespeichert. Durch die Einbeziehung einer Wettervorhersage, die entweder vor dem Flug entsprechend der Flugplanung den Atmosphärenzustand in der Umgebung der Flugroute bereitstellt oder durch die Anbindung an ein online Wetterinformationssystem, wie es bspw. in dem Projekt "WxFUSION" der EU (European Community) EU-FLYSAFE, 2005 konzipiert ist, kann durch die Abschätzung der zukünftigen Entwicklung des Kondensstreifens, insbesondere der zu erwartenden Lebensdauer eines Kondensstreifens nicht nur der aktuelle Strahlungsantrieb, sondern auch die über die Lebensdauer des Kondensstreifens integrierte Strahlungswirkung ermittelt werden. Die integrierte Strahlungswirkung, die sich mit einem Trajektorienmodell abschätzen lässt, bestimmt vorzugsweise unter Einbeziehung der Strahlungswirkung der emittierten langlebigen Treibhausgase, die im Flugzeug durch den Treibstoffverbrauch ("fuel flow") ohnehin erfasst werden, die Klimawirkung von Kondensstreifen und daraus entstehenden Cirrus-Wolken.

Die Erfindung ist von besonderem wirtschaftlichem Interesse, wenn im Rahmen der Bemühungen zur Begrenzung des Klimawandels nicht nur langlebige Treibhausgase, sogenannte " Kyoto-Gase", sondern auch andere anthropogene Einflüsse, wie von Flugzeugen verursachte Kondensstreifen (engl. "condensation trails"; "contrails"), auf das Klima berücksichtigt und in regulierende Maßnahmen, wie den Emissionshandel aufgenommen werden. In diesem Fall kann die vorliegende Erfindung die Bemühungen um klimawirksame Maßnahmen nachweisen.

Weitere Vorteile, Merkmale und Einzelheiten ergeben sich aus der nachfolgenden Beschreibung, in der ein Ausführungsbeispiel beschrieben ist. Beschriebene und/oder bildlich dargestellte Merkmale bilden für sich oder in beliebiger, sinnvoller Kombination den Gegenstand der Erfindung und können insbesondere zusätzlich auch Gegenstand einer oder mehrerer separaten Anmeidung/en sein. Gleiche, ähnliche und/oder funktionsgleiche Teile sind mit gleichen Bezugszeichen versehen.

Es zeigt:

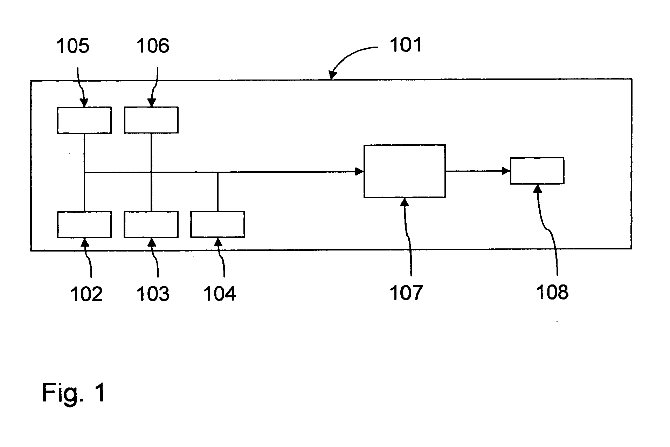

- Fig. 1: eine stark schematisierte Darstellung einer erfindungsgemäßen Vorrichtung an Bord eines Flugzeugs

Fig. 1 zeigt eine schematisierte Darstellung einer erfindungsgemäßen Vorrichtung zur Ermittlung und Anzeige klimarelevanter Wirkungen eines von einem Flugzeug (101) erzeugten Kondensstreifens an Bord des Flugzeugs (101), umfassend: erste Sensormittel (102, 103) zur Ermittlung von Strahlungsdaten von in der Erdatmosphäre aufwärtsgerichteter kurz- und langwelliger atmosphärischer Strahlung am Ort des Flugzeugs (101), zweite Sensormittel (104, 05) zur Ermittlung von Lufttemperatur und Luftfeuchte am Ort des Flugzeugs (101), ein Mittel (106) zur Bestimmung des aktuellen Zenitwinkels der Sonne am Ort des Flugzeugs (101), ein Auswertemittel (107), mit dem auf Basis der ermittelten Strahlungsdaten, der Lufttemperatur, der Luftfeuchte und des Sonnenstandes ein durch den Kondensstreifen bewirkter Strahlungsantriebswert ermittelbar ist, und ein Anzeigemittel (108) zur Anzeige des Strahlungsantriebswertes und/oder daraus abgeleiteter Größen.

## Patentansprüche

1. Vorrichtung zur Ermittlung und Anzeige klimarelevanter Wirkungen eines von einem Flugzeug (101) erzeugten Kondensstreifens an Bord des Flugzeugs (101), umfassend:
- erste Sensormittel (102, 103) zur Ermittlung von Strahlungsdaten von in der Erdatmosphäre aufwärtsgerichteter kurz- und langwelliger atmosphärischer Strahlung am Ort des Flugzeugs (101),
- zweite Sensormittel (104, 105) zur Ermittlung von Lufttemperatur und Luftfeuchte am Ort des Flugzeugs (101),
- ein Mittel (106) zur Bestimmung des aktuellen Zenitwinkels der Sonne am Ort des Flugzeugs,
- ein Auswertemittel (107), mit dem auf Basis der ermittelten Strahlungsdaten, der Lufttemperatur, der Luftfeuchte und des Sonnenstandes ein durch den Kondensstreifen bewirkter Strahlungsantriebswert ermittelbar ist, und
- ein Anzeigemittel (108) zur Anzeige des Strahlungsantriebswertes und/oder daraus abgeleiteter Größen.

2. Vorrichtung gemäß Anspruch 1,
mit einer ersten Schnittstelle, über die dem Auswertemittel (107) prognostische Wettersimulationsdaten für eine Umgebung des Flugzeugs (101) bereitstellbar sind, wobei das Auswertemittel (107) ein erstes Modul aufweist, mit dem auf Basis der prognostischen Wettersimulationsdaten, der Strahlungsdaten, der Lufttemperatur, der Luftfeuchte und des Zenitwinkels, eine Lebensdauer des Kondensstreifens und eine über die Lebensdauer integrierte Gesamtstrahlungswirkung des Kondensstreifens ermittelbar ist, und der Strahlungsantriebswert auf Basis der integrierten Gesamtstrahlungswirkung des Kondensstreifens ermittelbar ist.

3. Vorrichtung gemäß einem der Ansprüche 1 oder 2,
mit einer zweiten Schnittstelle, über die dem Auswertemittel (107) Treibstoffverbrauchsdaten des Flugzeugs bereitstellbar sind, wobei das Auswertemittel (107) ein zweites Modul aufweist, mit dem auf Basis der Treibstoffverbrauchsdaten eine Strahlungswirkung vom Flugzeug (101) emittierter Treibhausgase ermittelbar ist, und der Strahlungsantriebswert unter zusätzlicher Berücksichtigung der Strahlungswirkung der emittierten Treibhausgase ermittelbar ist.

4. Vorrichtung gemäß einem der Ansprüche 2 oder 3,
mit einer Empfangseinheit zum drahtlosen Empfang der Wettersimulationsdaten und zur Bereitstellung der Wettersimulationsdaten an der ersten Schnittstelle.

5. Vorrichtung gemäß einem der Ansprüche 2 bis 4,
mit einer Rechnereinheit zur Erzeugung und Bereitstellung der prognostischen Wettersimulationsdaten an der ersten Schnittstelle.

6. Vorrichtung gemäß einem der Ansprüche 1 bis 5,
mit einer Speichereinheit zur Speicherung ermittelter Strahlungsantriebswerte und/oder der daraus abgeleiteter Größen.

7. Vorrichtung gemäß einem der Ansprüche 1 bis 6,
mit einer Sendeeinheit zur drahtlosen Übermittlung von ermittelten Strahlungsantriebswerten und/oder der daraus abgeleiteten Größen an eine Empfangsstation.

8. Verfahren zur Ermittlung und Anzeige klimarelevanter Wirkungen eines von einem Flugzeug (101) erzeugten Kondensstreifens an Bord des Flugzeugs (101), umfassend folgende Schritte:
- Ermitteln von Strahlungsdaten von in der Erdatmosphäre aufwärtsgerichteter kurz- und langwelliger atmosphärischer Strahlung am Ort des Flugzeugs (101),
- Ermitteln einer aktuellen Lufttemperatur und einer aktuellen Luftfeuchte am Ort des Flugzeugs (101),
- Bestimmen des aktuellen Zenitwinkels der Sonne am Ort des Flugzeugs (101),
- Ermitteln eines durch den Kondensstreifen bewirkten Strahlungsantriebswertes auf Basis der ermittelten Strahlungsdaten, der Lufttemperatur, der Luftfeuchte und des Zenitwinkels,
und
- Anzeigen des Strahlungsantriebswertes und/oder daraus abgeleiteter Größen.

9. Verfahren gemäß Anspruch 8,
bei dem unter Einbeziehung von bereitgestellten prognostischen Wettersimulationsdaten für eine atmosphärische Umgebung des Flugzeugs (101), eine Lebensdauer des Kondensstreifens und eine über die Lebensdauer integrierte Gesamtstrahlungswirkung des Kondensstreifens ermittelt wird, und der Strahlungsantriebswert auf Basis der integrierten Gesamtstrahlungswirkung des Kondensstreifens ermittelt wird.

10. Verfahren gemäß einem der Ansprüche 8 oder 9,
bei dem unter Einbeziehung von aktuellen Treibstoffverbrauchsdaten des Flugzeugs (101) eine Strahlungswirkung vom Flugzeug (101) emittierter Treibhausgase ermittelt wird, und der Strahlungsantriebswert unter zusätzlicher Berücksichtigung der Strahlungswirkung der emittierten Treibhausgase ermittelt wird.

11. Verfahren gemäß einem der Ansprüche 9 oder 10,
bei dem die Wettersimulationsdaten drahtlos von einer Bodenstation an das Flugzeug (101) übermittelt und dort bereitgestellt werden.

12. Verfahren gemäß einem der Ansprüche 9 oder 10,
bei dem die Wettersimulationsdaten an Bord das Flugzeug (101) erzeugt und bereitgestellt werden.

13. Verfahren gemäß einem der Ansprüche 8 bis 12,
bei dem ermittelte Strahlungsantriebswerte und/oder daraus abgeleiteten Größen an Bord des Flugzeugs (101) gespeichert werden.

14. Verfahren gemäß einem der Ansprüche 8 bis 13,
bei dem ermittelte Strahlungsantriebswerte und/oder daraus abgeleiteten Größen drahtlos an eine Bodenstation übermittelt werden.

## Claims

1. A device for determining and indicating on board an airplane (101) climate-relevant effects of a contrail produced by the airplane (101),
comprising
- first sensor means (102, 103) for determining, at the location of the airplane (101), radiation data of short-wave and long-wave atmospheric radiation directed upwards in the earth's atmosphere,
- second sensor means (104, 105) for determining the air temperature and air humidity at the location of the airplane (101),
- a means (106) for determining the actual zenith angle of the sun at the location of the airplane,
- an evaluation means (107) by means of which, based on the determined radiation data, the air temperature, the air humidity and the position of the sun, a radiative forcing value caused by the contrail can be determined, and
- an indicating means (108) for indicating the radiative forcing value and/or parameters derived from it.

2. The device according to claim 1,
with a first interface, by way of which prognostic weather simulation data for the surroundings of the airplane (101) can be provided to the evaluation means (107), wherein the evaluation means (107) comprises a first module by means of which, based on the prognostic weather simulation data, the radiation data, the air temperature, the air humidity and the zenith angle, the lifespan of the contrail and the overall radiation effect integrated over the lifespan of the contrail can be determined, and the radiative forcing value can be determined based on the integrated total radiation effect of the contrail.

3. The device according to one of claims 1 or 2,
with a second interface, by way of which fuel consumption data of the airplane can be provided to the evaluation means (107), wherein the evaluation means (107) comprises a second module, by means of which, based on the fuel consumption data, the radiation effect of greenhouse gases emitted by the airplane (101) can be determined, and by additionally taking into account the radiation effect of the emitted greenhouse gases the radiative forcing value can be determined.

4. The device according to one of claims 2 or 3,
with a receiving unit for wirelessly receiving the weather simulation data and for providing the weather simulation data at the first interface.

5. The device according to any one of claims 2 to 4,
with an arithmetic unit for generating and providing the prognostic weather simulation data at the first interface.

6. The device according to any one of claims 1 to 5, with a storage unit for storing determined radiative forcing values and/or the parameters derived from them.

7. The device according to any one of claims 1 to 6,
with a transmitting unit for wirelessly conveying determined radiative forcing values and/or the parameters derived from them to a receiving station.

8. A method for determining and indicating on board an airplane (101) climate-relevant effects of a contrail produced by the airplane (101), comprising the following steps
- determining, at the location of the airplane (101), radiation data of short-wave and long-wave atmospheric radiation directed upwards in the earth's atmosphere,
- determining the actual air temperature and the actual air humidity at the location of the airplane (101),
- determining the actual zenith angle of the sun at the location of the airplane (101),
- determining the radiative forcing value caused by the contrail, based on the determined radiation data, the air temperature, the air humidity and the zenith angle, and
- indicating the radiative forcing value and/or parameters derived from it.

9. The method according to claim 8,
in which, taking into account provided prognostic weather simulation data for the atmospheric surroundings of the airplane (101), the lifespan of the contrail and the overall radiation effect integrated over the lifespan of the contrail is determined, and the radiative forcing value is determined based on the integrated total radiation effect of the contrail.

10. The method according to one of claims 8 or 9,
in which, taking into account actual fuel consumption data of the airplane (101), the radiation effect of greenhouse gases emitted by the airplane (101) is determined, and by additionally taking into account the radiation effect of the emitted greenhouse gases the radiative forcing value is determined.

11. The method according to one of claims 9 or 10,
in which the weather simulation data is wirelessly conveyed from a ground station to the airplane (101) where it is made available.

12. The method according to one of claims 9 or 10,
in which the weather simulation data is generated and made available on board the airplane (101).

13. The method according to any one of claims 8 to 12,
in which determined radiative forcing values and/or parameters derived from them are stored on board the airplane (101).

14. The method according to any one of claims 8 to 13, in which determined radiative forcing values and/or parameters derived from them are wirelessly conveyed to a ground station.

## Revendications

1. Dispositif pour déterminer et indiquer les effets sur le climat d'une traînée de condensation produite par un avion (101) à bord de l'avion (101), comprenant
- des premiers moyens de capteurs (102, 103) pour déterminer des données radiatives d'un rayonnement atmosphérique à ondes courtes et longues dirigé en montant dans l'atmosphère terrestre au niveau de l'avion (101),
- des seconds moyens de capteurs (104, 105) pour déterminer la température de l'air et l'humidité de l'air au niveau de l'avion (101),
- un moyen (106) pour déterminer l'angle zénithal actuel du soleil au niveau de l'avion,
- un moyen d'évaluation (107) avec lequel, en se basant sur les données radiatives déterminées, la température de l'air, l'humidité de l'air et la position du soleil, une valeur de forçage radiatif déclenchée par la traînée de condensation peut être déterminée, et
- un moyen d'affichage (108) pour indiquer la valeur de forçage radiatif et/ou des valeurs qui en ont été déduites.

2. Dispositif selon la revendication 1,
comprenant une première interface via laquelle des données de simulation météorologique prévisionnelles pour un environnement de l'avion (101) peuvent être fournies au moyen d'évaluation (107), sachant que le moyen d'évaluation (107) présente un premier module avec lequel, en se basant sur les données de simulation météorologique prévisionnelles, les données radiatives, la température de l'air, l'humidité de l'air et l'angle zénithal, une durée de vie de la traînée de condensation et un effet radiatif total de la traînée de condensation intégré sur la durée de vie peuvent être déterminés, et la valeur de forçage radiatif peut être déterminée en se basant sur l'effet radiatif intégré total de la traînée de condensation.

3. Dispositif selon la revendication 1 ou 2,
comprenant une seconde interface via laquelle des données de consommation de carburant de l'avion peuvent être fournies au moyen d'évaluation (107), sachant que le moyen d'évaluation (107) présente un second module avec lequel, en se basant sur les données de consommation de carburant, un effet radiatif des gaz à effet de serre émis par l'avion (101) peut être déterminé, et la valeur de forçage radiatif peut être déterminée en tenant en compte en plus de l'effet radiatif des gaz à effet de serre émis.

4. Dispositif selon l'une des revendications 2 ou 3,
comprenant une unité de réception pour la réception sans fil des données de simulation météorologique et pour la fourniture des données de simulation météorologique à la première interface.

5. Dispositif selon l'une des revendications 2 à 4,
comprenant une unité de détermination pour produire et fournir les données de simulation météorologique prévisionnelles à la première interface.

6. Dispositif selon l'une des revendications 1 à 5,
comprenant une unité de mémoire pour enregistrer des valeurs de forçage radiatif déterminées et/ou les valeurs qui en ont été déduites.

7. Dispositif selon l'une des revendications 1 à 6,
comprenant une unité d'émission pour la transmission sans fil de valeurs de forçage radiatif déterminées et/ou les valeurs qui en ont été déduites, à une station de réception.

8. Procédé pour déterminer et indiquer les effets sur le climat d'une traînée de condensation produite par un avion (101) à bord de l'avion (101), comprenant les étapes suivantes :
- détermination de données radiatives d'un rayonnement atmosphérique à ondes courtes et longues dirigé en montant dans l'atmosphère terrestre au niveau de l'avion (101),
- détermination d'une température de l'air actuelle et d'une humidité de l'air actuelle au niveau de l'avion (101),
- détermination de l'angle zénithal actuel du soleil au niveau de l'avion (101),
- détermination d'une valeur de forçage radiatif déclenchée par la traînée de condensation, en se basant sur les données radiatives déterminées, la température de l'air, l'humidité de l'air et la position du soleil, et
- l'indication de la valeur de forçage radiatif et/ou de valeurs qui en ont été déduites.

9. Procédé selon la revendication 8,
dans lequel, en intégrant des données de simulation météorologique prévisionnelles déjà fournies pour un environnement atmosphérique de l'avion (101), une durée de vie de la traînée de condensation et un effet radiatif total de la traînée de condensation intégré sur la durée de vie sont déterminés, et la valeur de forçage radiatif est déterminée sur la base de l'effet radiatif intégré total de la traînée de condensation.

10. Procédé selon l'une des revendications 8 ou 9,
dans lequel en intégrant les données de consommation de carburant actuelles de l'avion (101), un effet radiatif des gaz à effet de serre émis par l'avion (101) est déterminé, et la valeur de forçage radiatif est déterminée en tenant en compte en plus de l'effet radiatif des gaz à effet de serre émis.

11. Procédé selon l'une des revendications 9 ou 10,
dans lequel les données de simulation météorologique sont transmises sans fil d'une station au sol à l'avion (101) et y sont fournies.

12. Procédé selon l'une des revendications 9 ou 10,
dans lequel les données de simulation météorologique sont produites et fournies à bord de l'avion (101).

13. Procédé selon l'une des revendications 8 à 12, dans lequel des valeurs de forçage radiatif et/ou des valeurs qui en ont été déduites sont sauvegardées à bord de l'avion (101).

14. Procédé selon l'une des revendications 8 à 13,
dans lequel des valeurs de forçage radiatif et/ou des valeurs qui en ont été déduites sont transmises sans fil à une station au sol.
